# EUROPÄISCHE PATENTANMELDUNG

(11) **EP 0 559 083 A2**
(43) Veröffentlichungstag der Anmeldung: **08.09.1993**
(21) Anmeldenummer: 93103007.6
(22) Anmeldetag: 26.02.1993
(51) Int. Cl.: F21K 2/00, C09K 11/02, C09D 5/22, F21V 8/00

(54) **Leuchtkörper aus kombinierten Kunststoff-Platten, enthaltend Weisspigment und Fluoreszenzfarbstoff**

(30) Priorität: 06.03.1992 DE 9202955 U
(71) Anmelder: RÖHM GMBH, D-64293 Darmstadt (DE)
(72) Erfinder: Fischer, Udo, Dr.-Ing., W-6100 Darmstadt-Eberstadt (DE)

(57) **Zusammenfassung**

Die Erfindung betrifft Leuchtkörper aus transparenten, witterungsstabilen Kunststoff-Platten, vorzugsweise aus Polymethylmethacrylat-Gußteilen, enthaltend Weißpigment, Fluoreszenzfarbstoff und gegebenenfalls einen weiteren Farbstoff, die ein innen befindliches Leuchtmittel besitzen und ein Oberflächen-zu-Volumen-Verhältnis O : V von weniger als 6 : X, wobei X den minimalen Querschnitt in der Ebene, in der sich das Leuchtmittel befindet, bedeutet, aufweisen. Die Leuchtkörper können beispielsweise für Lichtwerbung, Hinweistafeln, Verkehrszeichen und Signalzeichen verwendet werden.

## Beschreibung

Die Erfindung betrifft Leuchtkörper aus Kunststoff-Platten, insbesondere aus Polymethylmethacrylat-Platten enthaltend Weißpigment und Fluoreszenzfarbstoff und gegebenenfalls weiteren Farbstoffen, die bei geringer Bautiefe gleichmäßig ausgeleuchtet werden können. Diese Leuchtkörper können beispielsweise im Bereich der Lichtwerbung, für Verkehrszeichen oder für Signalzeichen verwendet werden.

### Stand der Technik

Die Verwendung von Fluoreszenz-Farbstoffen in Kombination mit Weißpigmenten zur optischen Aufhellung von Kunststoffen ist schon seit längerem bekannt (z.B. K. Eschle, Plastverarbeiter 21 (7), Seite 629 bis 632, 1970).
In DE-OS 27 10 379 werden Polyesterfasern beschrieben, die mit Titandioxid und einem Fluoreszenzfarbstoff durch Polykondensation eines Gemischs aus Polyesterbausteinen mit o.g. Additiven und anschließender Schmelzespinnen in einem brillianten Weißton hergestellt werden.

Die Bereitstellung von Ersatzstoffen für Japan-Papier beschreibt JP-A 74-052 868 durch das Schmelzemischen von Polyethylen, Polypropylen, Glasfasern, Calciumcarbonat Titandioxid und Fluoreszenzfarbstoff und anschließendes Extrudieren dünner Filme.

EP 171 776 beschreibt farbige Rundstäbe aus transparentem Kunststoff-Material, insbesondere Acrylglas, enthaltend Fluoreszenzfarbstoff, mit der Maßgabe, daß der Rundstab eine längsgerichtete Zone mit gedecktem Material aufweist, die zusätzlich eingefärbt sein kann.
Fluoreszierende Beschichtungsmaterialien, bestehend aus Fluoreszenzfarbstoff, Calciumsulfit, Acrylat-Polymerisat und Lösungsmittel in Dispersion, die eine überlegene Fluoreszenz und Lichtstabilität aufweisen, werden in Japan, Kokai 78 133 240 beansprucht.
In EP-PS 72 949 werden Verkehrs- und Hinweisschilder mit einer kleinen Lichtquelle innerhalb eines Kunststoff-Leuchtkörpers, der entweder aus Fluoreszenzfarbstoffhaltigem oder völlig transparentem Kunststoff besteht, beschrieben. Die nach außen zeigenden Oberflächen dieser Schilder können bis auf deren Frontseite mit einem reflektierenden Material beschichtet sein, beispielsweise mit einer Weißpigment enthaltenden Schicht.
JP-PS 88 00 4583 beansprucht Formkörper, wie beispielsweise Platten, Filme, Stäbe, Röhren oder Fasern, aus einer Polymethylmethacrylat-Formmasse, die einen organischen Fluoreszenzfarbstoff enthält. Das von den Formkörpern absorbierte Licht mit einem breiten Wellenlängenspektrum wird zu Licht höherer Wellenlänge mit einem engen Wellenlängenspektrum transformiert.
Gebrauchsmuster G 91 03 495.7 beschreibt eine Lichtanlage, enthaltend eine von der Rückseite beleuchtete Hauptfläche aus lichtdurchlässigem Kunststoff und wenigstens eine die Hauptfläche beleuchtende Lichtquelle, die so angeordnet ist, daß das unmittelbar davon ausgehende Licht auf die Rückseite der Hauptfläche ungleichmäßig verteilt wird, mit der Maßgabe, daß die Hauptfläche aus einem Kunststoffplatten-Material mit einer Reflexion über 80 %, einer Absorption unter 10 % und einer Transmission unter 10 % besteht und daß hinter der Hauptfläche und parallel zu ihr eine weiße Fläche mit einer Reflexion über 80 % angeordnet ist.

### Aufgabe und Lösung

Bei Leuchtkörpern, wie sie in der Lichtwerbung oder für Signalzeichen eingesetzt werden, wird ein möglichst geringer Energieaufwand für Leuchtmittel, wie Glühlampen oder Leuchtstofflampen, angestrebt. Daher wird ein möglichst geringer Abstand zwischen Leuchtmittel und Leuchtkörper-Wandung (= Leuchtkörper-Oberfläche) angestrebt.
Notwendig hierfür sind Leuchtkörper-Wandungen, die das Licht diffus streuen und somit ein punktförmiges Durchscheinen der Lichtquelle(n) verhindern. Dies wird herkömmlich durch einen großen Abstand zwischen Lichtquelle(n) und Leuchtkörper-Wandung, der sogenannten Bautiefe gelöst. Dadurch bedingt müssen die Lichtquellen eine hohe energetisch aufwendige Lichtemission aufweisen (die Lichtintensität einer punktförmigen Lichtquelle nimmt mit dem reziproken Abstandsquadrat ab), um eine gleichmäßige Ausleuchtung aller Leuchtkörperwandungen zu gewährleisten.

Die in DE-OS 27 10 379 beschriebenen Polyester-Kunststoffe, die das Weißpigment Titandioxid und einen Fluoreszenz-Farbstoff enthalten, sind aufgrund ihrer mangelnden Transparenz und damit verminderter Lichttransmission für Leuchtkörper wenig geeignet.

Auch die in JP-A 72-94 027 beanspruchten Ersatzstoffe für Japan-Papier weisen eine nicht genügende Transparenz und Formstabilität für die Verwendung als Leuchtkörper auf.
EP 171 776 beschreibt massive Rundstäbe aus transparentem Kunststoff-Material, die Fluoreszenzfarbstoff enthalten und eine Zone mit gedecktem Material aufweisen. Eine Anwendung als Leuchtkörper mit innen befindlichem Leuchtmittel ist durch die massive Ausführung der Rundstäbe ausgeschlossen. Fluoreszierende Beschichtungsmaterialien, wie sie in Japan. Kokai 78 133 240 beansprucht werden, die in Dispersion aufgetragen werden, weisen zu geringe Schichtdicken auf, um eine effiziente diffuse Lichtstreuung zu gewährleisten.
Die in EP-PS 72 949 beschriebenen Kunststoff-Leuchtkörper sind aus Kunststoffen aufgebaut, die Fluoreszenzfarbstoff enthalten können und die an ihren nach außen zeigenden Oberflächen Schichten enthaltend Weißpigment aufweisen können. Diese Weißpigment-Schichten dienen zur Lichtreflexion und weisen dementsprechend keinen oder nur sehr bedingt transparenten Charakter auf.
Formkörper nach JP-PS 88 00 4583 bestehen aus Polymethacrylat-Formmasse, enthaltend einen organischen Fluoreszenzfarbstoff, der das Wellenlängenspektrum des vom Formkörper absorbierten Licht zu größeren Wellenlängen hin verschiebt. Diese Formkörper sind nicht in der Lage, Licht diffus streuen zu können.
Die in Gebrauchsmuster G 91 03 495.7 beanspruchten Leuchtanlagen weisen eine hohe Gleichmäßigkeit der Leuchtdichte auf, besitzen jedoch eine geringe Transmission des Kunststoffplattenmaterials, das erfindungsgemäß eine hohe Lichtreflexion aufweisen muß. Dies ist mit einer Verminderung an Lichtausbeute verbunden.

Die Aufgabenstellung, Leuchtkörper zur Verfügung zu stellen, die mit möglichst geringem Energieaufwand eine gleichmäßige Leuchtdichte an den Wandflächen von Leuchtkörpern gewährleisten, wird durch die erfindungsgemäßen Leuchtkörper gelöst.

Es wurde gefunden, daß eine hohe und gleichmäßige Leuchtdichte an den Wandflächen von Leuchtkörpern erreicht werden kann, die aus Kunststoff-Platten, enthaltend Weißpigment, Fluoreszenzfarbstoff und gegebenenfalls weitere Farbstoffe, bestehen und die ein Oberflächen-zu-Volumen-Verhältnis O [m²] : V [m³] von weniger als 6 : X [m] aufweisen, wobei X den minimalen Querschnitt des Leuchtkörpers in der Ebene, in der sich das Leuchtmittel befindet, bedeutet.

### Durchführung der Erfindung

Für den Aufbau der Leuchtkörper werden Platten aus transparentem, witterungsstabilem Kunststoff, bevorzugt aus Polymethylmethacrylat, oder mit transparentem Kunststoff beschichteten transparenten Trägern, bevorzugt aus Glas, wie beispielsweise Silikatglas, verwendet.
Als Zuschlagstoffe enthält der transparente Kunststoff 0,01 bis 10 Gew.-%, bevorzugt 0,1 bis 5 Gew.-% Weißpigment; 0,001 bis 1 Gew.-%, bevorzugt 0,005 bis 0,1 Gew.-% eines organischen Fluoreszenzfarbstoffs; sowie gegebenenfalls 0,01 bis 5 Gew.-%, bevorzugt 0,05 bis 3 Gew.-% eines Farbpigments.
Weißpigmente können beispielsweise Titandioxid, Zinkoxid, Zinksulfid, Bleicarbonat, basisches Bleisulfat, Antimonoxid, Bariumsufat oder Mischungen hiervon sein. Bevorzugt eingesetzt werden Titandioxid in der Rutil-Modifikation und Bariumsulfat (vgl. hierzu Kirk-Othmer, Encyclopedia of Chemical Technology, Vol. 17, Seiten 801 bis 814, 3rd. Edition, John Wiley & Sons, New York, 1982).
Als Fluoreszenzfarbstoffe finden beispielsweise Stilbenderivate, wie Mono(azol-zyl)-stilbene oder Bis(azolyl)-stilbene, Biphenylderivate, wie 4,4'-Bis(styryl)biphenyl, Pyrazolin-Derivate, wie 1,3-Diphenyl-2-pyrazoline, Bis(benzazol-2-yl)-Derivate oder Cumarin-Derivate, wie 7-Hydroxycumarin, Verwendung (vgl. hierzu Kirk Othmer, loc.cit., Vol. 4, Seiten 213 bis 226, 1978). Weitere geeignete Fluoreszenzfarbstoffe sind beispielsweise Fluoreszin, Rhodamin oder Perylenfarbstoffe, die unter Tageslichteinwirkung anregbar sind und rotes, gelbes oder grünes Fluoreszenzlicht erzeugen. Bekannte Handelssorten sind Hostasol ^{R} (Hoechst AG), Lisa ^{R}-Farbstoffe (Bayer AG) und Lumogen ^{R} (BASF AG).
Die Farbpigmente, die in der vorliegenden Erfindung zur Anwendung kommen können, müssen einer Reihe von technischen Anforderungen genügen: Hitzeechtheit, Oxidationsbeständigkeit, Migrationsechtheit, Lichtechtheit, Wetterechtheit und Dispergierbarkeit bei der Einarbeitung. Beispielsweise werden für die Einfärbung des bevorzugt verwendeten Polymethylmethacrylats Cadmiumpigmente bestehend aus Cadmiumsulfid oder Mischungen aus Cadmiumsulfid und - selenid, deren Farbskala von einem grünstichigen Gelb bis zu einem dunklen Bordeauxrot geht. Als Ersatz für die Cadmium-Pigmente werden organische Farbpigmente, wie beispielsweise Macrolex ^{R}-Farbstoffe (Bayer AG), Solvaperm ^{R}-Farbstoffe (Hoechst AG) oder Thermoplast ^{R}-Farbstoffe (BASF AG) eingesetzt, die zur Verbesserung der Lichtechtheit vorzugsweise 0,01 bis 3 Gew.-% einer in der Polymermatrix vorhandenen Säure enthalten (EP-OS 450 478).

Die erfindungsgemäßigen Leuchtkörper weisen an ihrer Oberfläche, d.h. an ihren Wandungen, hohe und sehr gleichmäßige Leuchtdichten auf, was auf die Kombination von Weißpigmenten, Fluoreszenzfarbstoff und gegegenenfalls weiteren Farbstoffen zurückzuführen ist.
Durch die Anregung der Fluoreszenz bedingt resultiert eine anscheinend vergrößerte Lichtdurchlässigkeit der Leuchtkörper bei gleichzeitig gleichmäßiger Ausleuchtung im Vergleich zu Leuchtkörpern, die aussschließlich Weißpigment oder die Kombination von Weißpigment und Farbstoff enthalten.
Auch wenn das Leuchtmittel, das beispielsweise eine Glühlampe, eine Reihe von Glühlampen oder eine Leuchtstofflampe sein kann, im Leuchtkörper so angeordnet ist, daß das unmittelbar davon ausgehende Licht ungleichmäßig auf die innenliegende Oberfläche des Leuchtkörpers verteilt wird, erscheint die außenliegende Oberfläche des Leuchtkörpers gleichmäßig ausgeleuchtet. Die den Leuchtkörper bildenden Kunststoff-Platten, enthaltend Weißpigment, gegebenenfalls Farbstoff und Fluoreszenzfarbstoff, können nahezu direkt, d.h. im Abstand von wenigen cm, auf die Leuchtmittel aufgelegt werden, ohne daß man auf der Außenseite der Kunststoff-Gußteile eine Markierung der Leuchtmittel durch unterschiedlich helle Flächen bemerkt. Auch schräg einfallendes Licht bewirkt eine Anregung der Fluoreszenz, womit eine geringe Bautiefe der Leuchtkörper möglich wird. Unter Bautiefe sei das Verhältnis von Oberfläche[in m²]-zu-Volumen [in m³] (O:V) des Leuchtkörpers in Relation zum minimalen Querschnitt X [in m] in der Ebene, in der sich das Leuchtmittel befindet, verstanden. Bei ideal symmetrischen Leuchtkörpern, wie beispielsweise Kugeln oder Würfeln, die durch ein zentrosymmetrisch angeordnetes Leuchtmittel gleichmäßig ausgeleuchtet werden, beträgt dieses Verhältnis O : V = 6 : X. Bei nicht ideal symmetrischen Leuchtkörpern, wie beispielsweise Quadern, Ellipsoiden oder Kegeln, wie sie vorzugsweise in der Lichtwerbung verwendet werden, beträgt das Verhältnis O : V < 6 : X. Bei diesen Leuchtkörpern sind die außenliegenden Oberflächen auch bei zentrischer Anordnung nicht gleichmäßig ausgeleuchtet und das Leuchtmittel erscheint an der Oberfläche des Leuchtkörpers als helle Markierung, wie schon ausgeführt. Die erfindungsgemäßen Leuchtkörper weisen diesen Nachteil nicht auf.

### Vorteile der Erfindung

Die erfindungsgemäßen Leuchtkörper, enthaltend Weißpigmente, Fluoreszenzfarbstoff und gegebenenfalls einen weiteren Farbstoff, weisen eine anscheinend vergrößerte Lichtdurchlässigkeit (gemessen als Leuchtdichte nach DIN 5032, Teil 1) und eine gleichmäßige Ausleuchtung bei geringerem energetischem Aufwand für das Leuchtmittel auf. Damit können die den Leuchtkörper bildenden Kunststoff-Platten, enthaltend Weißpigment, Fluoreszenzfarbstoff und gegebenenfalls einen weiteren Farbstoff nahezu direkt auf das/die Leuchtmittel aufgelegt werden, ohne daß man auf der Außenseite der Kunststoff-Platten eine Markierung der Leuchtmittel durch unterschiedlich helle Flächen bemerkt. Dies bedeutet, daß die Bautiefe von Leuchtkörpern, die normalerweise bei gleichmäßiger Ausleuchtung der Leuchtkörper ziemlich groß ist und dadurch auch einen höheren Energiebedarf der Leuchtmittel bei vergleichbarer Leuchtdichte an der Oberfläche des Leuchtkörpers bedingt, deutlich reduziert werden kann, was wiederum zu deutlicher Materialersparnis beim Bau von Leuchtkörpern führt.

### Beispielhafte Durchführung der Erfindung

Es werden mit entsprechend der Erfindung mit fluoreszierendem Farbstoff und Weißpigment eingefärbten Platten aus Polymethylmethacrylat bei einer vorzugebenden Anordnung von weißen Leuchtstofflampen Leuchtdichten erreicht, die zumindest dreimal größer sind als diejenigen, die bei gleicher Lampenanordnung mit in herkömmlicher Weise, d.h. mit Farbpigmenten, eingefärbten Platten aus Polymethylmethacrylat möglich sind. Diese Beobachtungen bzw. Meßergebnisse gelten sowohl für durchgelassenes als auch für zurückgeworfenes Licht. Das bedeutet, daß die erfindungsgemäß hergestellten Platten unter identischen Beleuchtungsbedingungen wesentlich heller wirken können als ein ideal weißes und ideal lichtstreuendes Material.

## Patentansprüche

1. Leuchtkörper aus Kunststoff-Platten,
enthaltend Weißpigment und Fluoreszenzfarbstoff,
dadurch gekennzeichnet,
daß die Leuchtkörper innen befindliche Leuchtmittel besitzen, ein Oberflächen-zu-Volumen-Verhältnis von weniger als 6 : X, wobei X den minimalen Querschnitt in der Ebene, in der sich das Leuchtmittel befindet, bedeutet, aufweisen.

2. Leuchtkörper gemäß Anspruch 1, dadurch gekennzeichnet, daß neben Weißpigment und Fluoreszenzfarbstoff weitere Farbstoffe anwesend sind.

3. Leuchtkörper gemäß den Ansprüchen 1 und 2, dadurch gekennzeichnet, daß der Kunststoff Polymethylmethacrylat ist.

4. Leuchtkörper gemäß den Ansprüchen 1 bis 3, dadurch gekennzeichent, daß der Kunststoff, enthaltend Weißpigment und Floreszenzfarbstoff auf einem transparenten Träger als Schicht aufgebracht ist.
